(19) Europäisches Patentamt
European Patent Office
Office européen des brevets

(11) Veröffentlichungsnummer: **0 371 957 A2**

(12) **EUROPÄISCHE PATENTANMELDUNG**

(21) Anmeldenummer: **89890303.4**

(22) Anmeldetag: **22.11.89**

(51) Int. Cl.5: **D21H 13/26, D21H 13/16, D21H 17/13**

(30) Priorität: **29.11.88 AT 2932/88**
**13.04.89 AT 879/89**

(43) Veröffentlichungstag der Anmeldung:
**06.06.90 Patentblatt 90/23**

(84) Benannte Vertragsstaaten:
**AT BE CH DE ES FR GB IT LI LU NL SE**

(71) Anmelder: **Lenzing Aktiengesellschaft**

**A-4860 Lenzing(AT)**

(72) Erfinder: **Loy, Walter, Dipl.-Ing.**
**Welfenstrasse 8**
**A-4810 Gmunden(AT)**
Erfinder: **Vodiunig, Robert, Dipl.-Ing.**
**Stollenweg 19/12**
**A-8700 Leoben(AT)**
Erfinder: **Weinrotter, Klaus, Dipl.-Ing. Dr.**
**Feldgasse 14**
**A-4840 Vöcklabruck(AT)**
Erfinder: **Schobesberger, Manfred**
**Gerlham 44**
**A-4861 Seewalchen(AT)**
Erfinder: **Schobesberger, Claus, Dr.**
**Hamburgerstrasse 21/3**
**A-4840 Vöcklabruck(AT)**

(74) Vertreter: **Wolfram, Gustav, Dipl.-Ing.**
**Schwindgasse 7 P.O. Box 205**
**A-1041 Wien(AT)**

(54) **Schwer entflammbare, hochtemperaturbeständige, papierartige Materialien auf Basis von thermostabilen Polymeren.**

(57) Zur Herstellung eines schwer entflammbaren, hochtemperaturbeständigen, papierartigen Materials auf Basis von Polyimidfasern der allgemeinen Formel

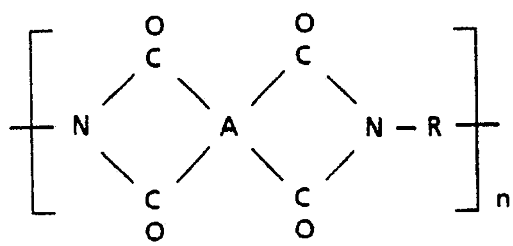

, (I)

welches Material ein Flächengewicht zwischen 20 und 1.100 g/m$^2$, einen LOI-Wert von mindestens 32 % $O_2$ und einen Tg-Punkt von mindestens 300 °C aufweist, wird eine Pulpe bestehend aus einer wässerigen Suspension von Polyimidfasern und gewünschtenfalls Polyimidfibriden mit Struktureinheiten der allgemeinen Formel (I) auf einer Papiermaschine zu einem Vlies verarbeitet und dieses entwässert und getrocknet, wobei die Polyimidfasern in zerkleinertem Zustand, u.zw. mit einer Faserlänge von 0,01 bis 120 mm, zur Vliesbildung eingesetzt werden.

Erfindungsgemäße papierartige Materialien mit einem Flächengewicht zwischen 60 und 290 g/m$^2$ können hergestellt werden, indem ein handhabbares Flächengebilde aus Polyimidfasern mit einer Polyimidlösung in Kontakt gebracht, getrocknet und gegebenenfalls verdichtet wird.

EP 0 371 957 A2

**Schwer entflammbare, hochtemperaturbeständige, papierartige Materialien auf Basis von thermostabilen Polymeren**

Die Erfindung betrifft ein schwer entflammbares, hochtemperaturbeständiges, papierartiges Material auf Basis von thermostabilen Polymeren sowie Verfahren zu seiner Herstellung.

Synthetische Papiere aus thermostabilen Polymeren sind bekannt und werden vor allem für Elektroisolierungen verwendet. Eine weitere Anwendungsmöglichkeit sind daraus hergestellte Kernmaterialien (Honeycombs) für Sandwichbauteile.

Die bekannten Verfahren verwenden herkömmliche Techniken der Papierherstellung. Dazu ist es aber notwendig, Pulpen als Ausgangsmaterialien für diese Papiere herzustellen, die nicht nur Fasern, sondern auch Fibrillen und/oder Fibride enthalten. Diese zweite Faserart besitzt eine entsprechende Oberflächenstrukturierung, ähnlich wie sie cellulosische Fasern von Natur aus besitzen. Diese Strukturierung ist für eine Herstellung synthetischer Papiere aus Pulpen unbedingt notwendig.

Eine derartige Herstellung ist z.B. in der US-A - 3,756,908 beschrieben. Ausgangsmaterialien sind Fasern und Fibride aus aromatischen Polyamiden (m-Aramide), wobei die Fasern nach einem bekannten Spinnverfahren und die Fibride durch Fällung einer Polymerlösung hergestellt werden. Die wässerige Aufschlämmung einer Faserfibridmischung wird mittels einer Papiermaschine zu einem Papier verarbeitet, welches im Anschluß noch kalandriert werden kann.

Auch die EP-B - 0 019 113 hat eine papierähnliche Bahn zum Gegenstand. Das Faserausgangsmaterial und amorphe Partikel werden zusammen suspendiert. Aus dieser Pulpe werden nach einem bekannten Papierherstellungsverfahren papierähnliche Bahnen erhalten, deren Festigkeit durch Zugabe von Vernetzer und Bestrahlung erhöht werden.

Die US-A - 2,999,788 beschäftigt sich mit der Herstellung von Pulpe aus Fibriden verschiedener Polymerer sowie die daraus hergestellten Strukturen.

Die Herstellung von Fibriden aus m-Aramiden, die anschließend zur Herstellung von synthetischen Papieren verwendet werden können, werden von einigen JP-PSen beschrieben (JP 59-47695, JP 60-126400, JP 61-157532, JP 62-85014, JP 62-85015, JP 62-85018).

Die Herstellung von Fibriden aus synthetischen Polymeren wird auch in der US-A - 3, 018, 091 beschrieben.

Die bisher bekannten synthetischen Papiere, insbesondere auf Basis von aromatischen Polyamiden, haben sich in ihrer Hochtemperaturbeständigkeit, der Alterungsbeständigkeit und Belastbarkeit bei höheren Temperaturen in vielen Anwendungsbereichen als nicht mehr zufriedenstellend erwiesen.

Es ist Aufgabe der Erfindung, diese Nachteile zu vermeiden und sie besteht darin, daß hochtemperaturstabile und schwer entflammbare papierartige Materialien auf Basis von Polyimidpolymeren der allgemeinen Formel

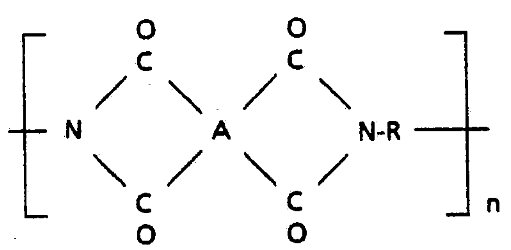 , (I)

worin n eine ganze Zahl größer als 1 bedeutet und A für eine vierbindige aromatische Gruppe ausgewählt aus

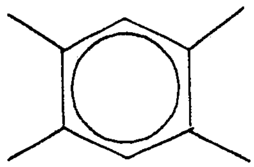

,

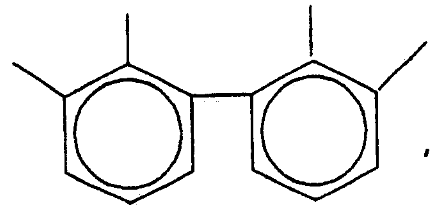

,

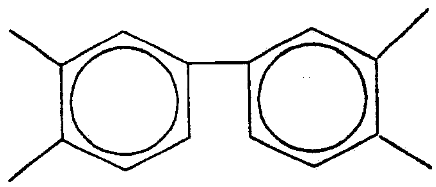

oder

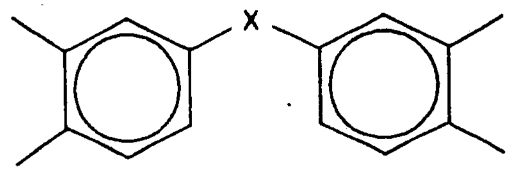

worin X für CO, $CH_2$, O, S, $CF_2$ steht und R für mindestens eine der folgenden zweibindigen aromatischen Gruppen, ausgewählt aus

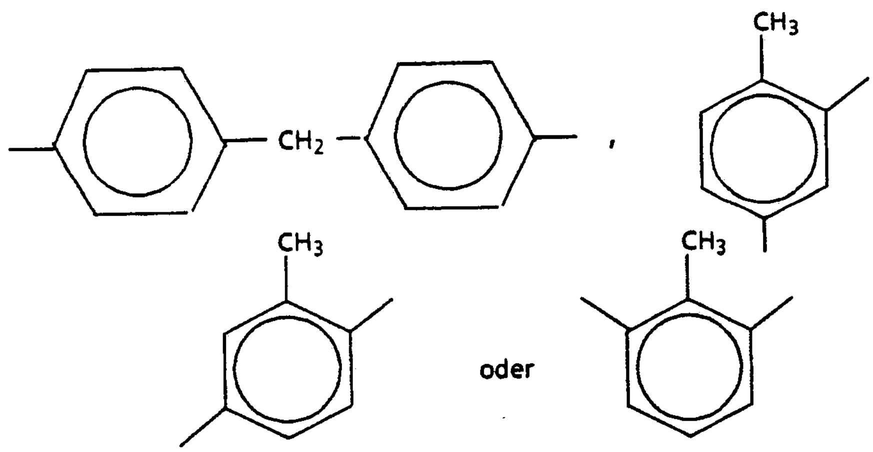

, , oder

steht, bereitgestellt werden, welches Material in Kombination die folgenden Eigenschaften aufweist: ein Flächengewicht zwischen 20 und 1.100 g/m², insbesondere zwischen 60 und 290 g/m² einen LOI-Wert (limited oxygen index) von mindestens 32 % $O_2$ und einen Tg-Punkt von mindestens 300 °C.

Weitere Eigenschaften des erfindungsgemäßen Materials können sein:

- eine Reißfestigkeit in Längsrichtung zwischen 30 und 120 N/mm², und
- eine elektrische Durchschlagsfestigkeit von 10 bis 65 kV/mm bei Gleichspannung und von 15 bis 50 kV/mm bei Wechselspannung.

Die Polyimidfasern können teilweise durch andere hochtemperaturbeständige organische oder anorganische Fasern ersetzt werden, ohne das Eigenschaftsspektrum wesentlich zu ändern.

Erfindungsgemäße papierartige Materialien mit einem Flächengewicht zwischen 60 und 290 g/m² können hergestellt werden, indem ein handhabbares Flächengebilde auf Basis von Polyimidfasern der allgemeinen Formel

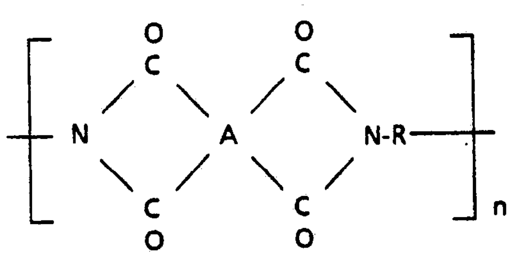

, (I)

wobei n, A und X die oben angegebene Bedeutung besitzen und R für eine zweibindige aromatische Gruppe steht, mit einer Polyimidlösung in Kontakt gebracht, getrocknet und gegebenenfalls verdichtet wird.

Die genannten Polyimidfasern sind bekannt und können beispielsweise nach dem in der AT-B - 377.016 beschriebenen Verfahren hergestellt werden.

Als handhabbare Flächengebilde werden vorteilhaft Gewebe, Gewirke, Vliese oder Nadelfilze, vorzugsweise in hitzegeschrumpftem Zustand, verwendet.

Besonders geeignet sind Nadelfilze mit einem Flächengewicht von 40 bis 150 g/m² bzw. vorgeschrumpfte Nadelfilze mit einem Flächengewicht von 60 bis 200 g/m² .

Die Flächengebilde werden mit einer Lösung des Polyimids der allgemeine Formel 1, wobei n, A, X und R die oben angegebene Bedeutung besitzen, imprägniert. Lösungsmittel sind vorzugsweise DMF, N-Methylpyrrolidon (NMP), Dimethylacetamid (DMAc), DMSO oder andere stark polare Lösungsmittel und Gemische dieser Lösungsmittel. Als Mischkomponenten können auch weniger polare oder unpolare Lösungsmittel, wie Dioxan, chlorierte Kohlenwasserstoffe u.a. verwendet werden. Der Polymeranteil der Lösung beträgt vorzugsweise 3 bis 40 Gew.%.

Die Imprägnierung kann nach einem der üblichen Imprägnierverfahren durchgeführt werden, wobei die Temperatur der Lösung zwischen 10 und 100 ° C betragen kann.

Im oberen Temperaturbereich gestattet die verringerte Viskosität der Lösung eine raschere Durchtränkung und somit eine höhere Produktion.

Zweckmäßigerweise wird die Materialbahn durch eine Lösung von Polyimid durchgezogen und anschließend vom Lösungsmittel befreit. In einer vorteilhaften Verfahrensweise wird die Bahn durch eine Wässerungswanne geführt, wobei das Lösungsmittel mit heißem Wasser, vorzugsweise bei 60 bis 90 ° C, extrahiert wird. Die anschließende Trocknung kann durch Bestrahlung, Kontaktwärme oder Konvektion erfolgen.

Die imprägnierten, getrockneten Flächengebilde können zur Vergleichmäßigung der Dicke noch auf einem Glättwerk, Mehrwalzenkalander oder in einer Plattenpresse vorzugsweise bei einer Temperatur zwischen 50 und 350 ° C verdichtet werden. Dabei wird am besten mit "Liniendrücken" (Walzentrennkraft pro Längeneinheit) von 10 bis 1000 kN/m gearbeitet.

Es hat sich gezeigt, daß die erfindungsgemäßen papierähnlichen Materialien mit einem Flächengewicht zwischen 60 und 290 g/m² auch unter Verwendung an sich bekannter Techniken der Papierherstellung erzeugt werden können, indem eine Pulpe bestehend aus einer wässerigen Suspension von Polyimidfasern und Polyimidfibrillen und/oder Polyimidfibriden mit Struktureinheiten der allgemeinen Formel

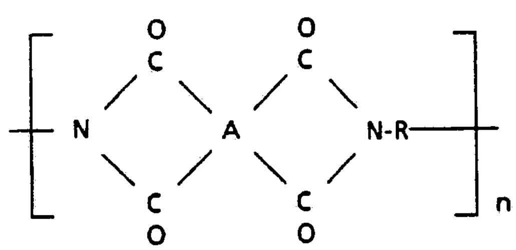

, (I)

wobei n, A, X und R die oben angegebene Bedeutung besitzen, in an sich bekannter Weise auf einer Papiermaschine zu einem Vlies verarbeitet und dieses entwässert und getrocknet wird.

Erfindungsgemäße papierähnliche Materialien mit einem Flächengewicht zwischen 20 und 1.100 g/m² können hergestellt werden, indem eine Pulpe bestehend aus einer wässerigen Suspension von Polyimidfasern und gewünschtenfalls Polyimidfibriden mit Struktureinheiten der allgemeinen Formel

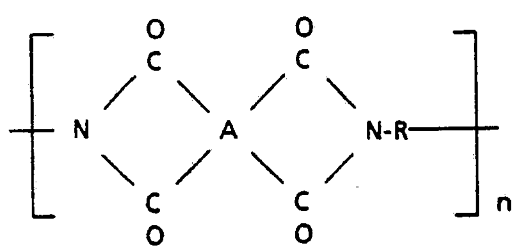

, (I)

wobei n, A, X und R die oben angegebene Bedeutung besitzen, in an sich bekannter Weise, auf einer Papiermaschine zu einem Vlies verarbeitet und dieses entwässert und getrocknet wird, wobei die Polyimidfasern zur Vliesbildung in zerkleinertem Zustand, u.zw. mit einer Faserlänge von 0,01 bis 120 mm

eingesetzt werden.

Vorzugsweise wird dabei ein Gemisch aus Fasern verschiedener Länge eingesetzt, wodurch eine besonders hohe Gleichmäßigkeit und Festigkeit des Papiers erzielt wird. Der Titer der verwendeten Fasern liegt vorzugsweise zwischen 0,7 und 20 dtex.

Neben den Polyimidfasern bzw. Polyimidfibriden können in der zu verarbeitenden Pulpe auch Fasern aus Polyvinylalkohol enthalten sein. Auch Fasern, Fibride und Fibrillen aus anderen Polymeren oder Materialien, z.B. Asbest, Kohlenstoff, können der Pulpe beigemischt werden. Jede Art von Füllstoff, der bei der üblichen Papierherstellung verwendet werden kann, bietet sich an.

Die Ausgangsmaterialien können auch spinngefärbt sein, um farbige Papiere herzustellen. Eingesponnene Additive, wie Ruß, verleihen dem Papier eine inhärente elektrische Leitfähigkeit.

Die Vliesbildung kann sowohl auf einer Papiermaschine als auch auf einem Naßvliesformer oder einem Blattbildner vorgenommen werden.

Zur Verbesserung der Vliesfestigkeit können der Pulpe Hilfsstoffe bzw. Bindemittel, z.B. auf Polyvinylalkohol- oder Siliconbasis, beigegeben werden. Diese können aber auch dem entwässerten Vlies durch Sprühen, Spritzen, Berieseln oder Eintauchen, aufgebracht werden, worauf es getrocknet wird.

Bindemittel auf Siliconbasis sind gut geeignet zur Vliesverfestigung, da sie sich bei Temperaturen von über 200 °C zersetzen und lediglich Siliciumdioxid in feinstverteilter Form im Papier hinterlassen, was sich auf die Eigenschaften des Endproduktes praktisch nicht nachteilig auswirkt.

Eine bevorzugte Ausführungsform des erfindungsgemäßen Verfahrens ist dadurch gekennzeichnet, daß das getrocknete Vlies in einer Plattenpresse oder einem Mehrwalzenkalander verpreßt wird. Es können auch mehrere übereinandergelegte Vliese miteinander verpreßt werden.

Dies kann mit Liniendrücken zwischen 0,1 und 1000 kN/m und bei Temperaturen von vorzugsweise 70 °C bis 450 °C erfolgen. Es ist auch möglich, mehrlagige Vliese zu verpressen, wobei der Zusammenhalt der einzelnen Lagen durch die Thermoplastizität des Polyimides gewährleistet ist, welcher noch durch Zusatz von Bindemitteln verstärkt werden kann.

Das erfindungsgemäß hergestellte papierartige Material besitzt eine gleichmäßige und glatte Oberfläche und kann nach bekannten Techniken auch beschichtet werden, um z.B. gefärbte, leitfähige oder hochglänzende Oberflächen zu erhalten.

Das erfindungsgemäße papierähnliche Material ist auch gut geeignet für Einsatzzwecke in Bereichen, die u.a. eine hohe Thermostabilität erfordern, z.B. für Isoliermaterialien in der Elektroindustrie, für Motoren, Generatoren und Transformatoren, weiters als flächige Dichtungsmaterialien im Maschinenbau, beispielsweise als Dichtungen in Verbrennungsmotoren, wie z.B. Zylinderkopfdichtungen und ähnliches.

In den nachfolgenden Beispielen wird die Erfindung noch näher erläutert, wobei in den Beispielen 1 bis 6 und 10 bis 24 die Herstellung erfindungsgemäßer papierartiger Materialien mit Flächengewichten zwischen 60 und 290 g/m² bzw. zwischen 20 und 1.100 g/m² beschrieben wird. Die Beispiele 7 und 8 betreffen die an sich bekannte Herstellung von Polyimid-Fibriden bzw. -Fibrillen. Die beschriebenen Eigenschaften der erfindungsgemäß hergestellten papierartigen Materialien wurden mit folgenden Prüfmethoden bestimmt:

LOI (Limiting Oxygen Index) ASTM D-2863
TGA (Thermogravimetrische Analyse)
Gerät: Perkin Elmer TGA/2
Aufheizrate: 20 °C/min
Bestimmung von Gewichtsverlusten mit Onset
DSC (Differential Scanning Calorimetry)
Gerät: Perkin Elmer DSC/4
Aufheizrate: 20 °C/min
Elektrische Durchschlagsfestigkeit nach DIN 53481
Zugfestigkeit und Dehnung nach DIN 53455

Beispiel 1:

Ausgangsmaterialien:

Polyimid-Nadelfilz,
hergestellt aus Benzophenon-3,3′,4,4′-tetracarbonsäuredianhydrid und 4,4′-Methylen-bis-(phenylisocyanat) und 2,4-und 2,6-Tolylendiisocyanat (Handelsbezeichnung P 84, Hersteller: Lenzing Aktiengesellschaft),

Flächengewicht: 85 $g/m^2$
Breite ca. 150 mm
Polyimidlösung, 20 Gew.% P 84 in DMF

Der Nadelfilz wurde bei 22 °C imprägniert, getrocknet und mittels eines Zweiwalzenkalanders verdichtet, wobei die
Walzentemperatur 250 bis 245 °C, der
Walzenspalt 0,04 mm und die
Lagerkraft 10 kN
betrug.

Das erfindungsgemäß erhaltene papierartige Material wies ein
Flächengewicht von 167 $g/m^2$ und eine
mittlere Stärke von 0,20 mm
auf.

Thermische Eigenschaften:

LOI: 36 bis 37 % $O_2$
TGA: größter Gewichtsverlust bei 530 °C
Tg-Punkt: 312 °C

Mechanische Eigenschaften:

Reißfestigkeit - längs: 30 $N/mm^2$
-quer: 27 $N/mm^2$
Dehnung - längs: 8 %
-quer: 4 %

Die elektrische Durchschlagsfestigkeit betrug bei
Gleichspannung: 40 kV/mm und bei
Wechselspannung: 12 kV/mm.

Beispiel 2:

Ausgangsmaterialien:

Polyimid-Nadelfilz analog Beispiel 1, aber mit einem
Flächengewicht von 120 $g/m^2$
Breite ca. 150 mm
Polyimidlösung, 10 Gew.% P 84 in DMF

Der Nadelfilz wurde bei 15 °C imprägniert, getrocknet und mittels eines Zweiwalzenkalanders verdichtet, wobei die
Walzentemperatur 250 °C, der
Walzenspalt 0,04 mm und die
Lagerkraft 43 kN und nach nochmaligem Durchlaß bei sonst unveränderten Einstellungen 35 kN
betrug.

Das erfindungsgemäß erhaltene papierartige Material wies ein Flächengewicht von 238 $g/m^2$ und eine
mittlere Dicke von 0,24 mm
auf.

Thermische Eigenschaften:

LOI: 36 bis 37 %$O_2$
TGA: größter Gewichtsverlust bei 530 °C
Tg-Punkt: 312 °C

Mechanische Eigenschaften:

Reißfestigkeit - längs: 50 $N/mm^2$
quer: 30 $N/mm^2$
Dehnung - längs: 6,5 %
quer: 3%

Die elektrische Durchschlagsfestigkeit betrug bei Gleichspannung: 30 kV/mm und bei Wechselspannung: 17 kV/mm.

Beispiel 3:

Ausgangsmaterialien:

Polyimid-Nadelfilz analog Beispiel 2
Polyimidlösung, 15 Gew.% P 84 in DMF

Der Nadelfilz wurde bei 20 °C imprägniert, getrocknet und mittels eines Zweiwalzenkalanders verdichtet.

Das erfindungsgemäß erhaltene papierartige Material wies ein Flächengewicht von 222 $g/m^2$ und eine mittlere Dicke von 0,28 mm auf.

Thermische Eigenschaften:

LOI: 36 bis 37 % $O_2$
TGA: größter Gewichtsverlust bei 530 °C
Tg-Punkt: 312 °C

Mechanische Eigenschaften:

Reißfestigkeit - längs: 33 $N/mm^2$ Dehnung - längs: 7,5 %

Die elektrische Durchschlagsfestigkeit betrug bei Gleichspannung: 25 kV/mm und bei Wechselspannung: 9 kV/mm.

Beispiel 4:

Ausgangsmaterialien:

Polyimid-Nadelfilz analog Beispiel 1, aber mit einem Flächengewicht von 60 $g/m^2$
Breite ca. 150 mm
Polyimidlösung, 30 Gew.% P 84 in DMF

Der Nadelfilz wurde bei 550 °C imprägniert, getrocknet und mittels eines Zweiwalzenkalanders verdichtet, wobei die Walzentemperatur 250 °C, der Walzenspalt 0,04 mm und die Lagerkraft 10 kN betrug.

Das erfindungsgemäß erhaltene papierartige Material wies ein Flächengewicht von 90 $g/m^2$ und eine mittlere Dicke von 0,15 mm

auf.

Thermische Eigenschaften:

LOI: 36 bis 37 % $O_2$
TGA: größter Gewichtsverlust bei 530 °C
Tg-Punkt: 312 °C

Mechanische Eigenschaften:

Reißfestigkeit - längs: 50 $N/mm^2$
quer: 30 $N/mm^2$
Dehnung - längs: 4 %
quer: 3 %

Die elektrische Durchschlagsfestigkeit betrug bei
Gleichspannung: 55 kV/mm und bei
Wechselspannung: 40 kV/mm.

Beispiel 5:

Ausgangsmaterialien:

Polyimid-Nadelfilz analog Beispiel 1, aber mit einem
Flächengewicht von 240 $g/m^2$
Breite ca. 150 mm
Polyimidlösung, 5 Gew.% P 84 in DMF

Der Nadelfilz wurde bei 20 °C imprägniert, getrocknet und mittels eines Zweiwalzenkalanders verdichtet, wobei die
Walzentemperatur 250 °C, der
Walzenspalt 0,04 mm und die
Lagerkraft 40 bis 52 kN
betrug.

Das erfindungsgemäß erhaltene papierartige Material wies ein
Flächengewicht von 260 $g/m^2$ und eine
mittlere Dicke von 0,26 mm
auf.

Thermische Eigenschaften:

LOI: 36 bis 37 % $O_2$
TGA: größter Gewichtsverlust bei 530 °C
Tg-Punkt: 312 °C

Mechanische Eigenschaften:

Reißfestigkeit - längs: 60 $N/mm^2$
quer: 40 $N/mm^2$
Dehnung - längs: 9 %
quer: 6 %

Die elektrische Durchschlagsfestigkeit betrug bei
Gleichspannung: 25 kV/mm und bei
Wechselspannung: 10 kV/mm.

Beispiel 6:

Ausgangsmaterialien:

Polyimid-Nadelfilz analog Beispiel 1, aber mit einem
Flächengewicht von 260 $g/m^2$
Breite ca. 150 mm
Polyimidlösung, 15 Gew.% P 84 in DMF

Der Nadelfilz wurde bei 20 °C imprägniert, getrocknet und mittels eines Zweiwalzenkalanders verdichtet, wobei die
Walzentemperatur 230 bis 240 °C, der
Walzenspalt 0,04 mm und die
Lagerkraft 35 kN
betrug.

Das erfindungsgemäß erhaltene papierartige Material wies ein
Flächengewicht von 290 $g/m^2$ und eine
mittlere Dicke von 0,35 mm
auf.

Thermische Eigenschaften:

LOI: 36 bis 37 % $O_2$
TGA: größter Gewichtsverlust bei 530 °C
Tg-Punkt: 312 °C

Mechanische Eigenschaften:

Reißfestigkeit - längs: 110 $N/mm^2$
quer: 90 $N/mm^2$
Dehnung - längs: 15 %
quer: 12 %

Die elektrische Durchschlagsfestigkeit betrug bei
Gleichspannung: 12 kV/mm und bei
Wechselspannung: 9 kV/mm.

Beispiel 7:

Die Herstellung von Fibriden kann in bekannter Weise z.B. durch Versprühen der Polymerlösung in ein wässeriges Fällbad erfolgen.

Dazu wurde eine 5%-ige Lösung von P 84 in DMF mittels einer Zahnradpumpe einer Zweistoffdüse zugeführt und mittels Druckluft in das wässerige Fällbad zerstäubt:
Düsendurchmesser: 1,2 mm
Fördermenge (Polymerlösung): 100 $cm^3$/min
Preßluft-Druck: 6bar

Der Durchmesser der erhaltenen Fibride betrug im Mittel 2-3 mm.

Beispiel 8:

Polyimidfasern mit einer Stapellänge von 5 mm und einem Titer von 2,2 dtex wurden in Wasser aufgeschlagen. Diese Suspension wurde nun einem Kegelrefiner zugeführt und dort solange belassen bis der Grad an Fibrillierung (Anteil an Fibrillen) ca. 40 % betrug.
Stoffdichte: 4 %
Kegelrotor (8 °): 1500 Upm
Einlaufdruck: 0,5 bar

Auslaufdruck: 3,5 bar
Verweilzeit: 40 min

Beispiel 9:

Polyimidfasern mit einer Stapellänge von 5 mm und einem Titer von 2,2 dtex wurden durch eine Feinprallmühle (Plattenschlägerwerk, Siebring 0,5 mm, Riffeltrapez, 13.900 Upm) im Kreislauf solange geführt, bis der Grad an Fibrillierung ca. 90 % betrug.

Beispiel 10:

Polyimidfasern mit einem Fasertiter von 2,2 dtex und einer Stapellänge von 2,5 mm, 5,0 mm und 10,0 mm, sowie gemahlene Polyimidfasern mit einer Länge von 0,01 bis 5,0 mm und Polyvinylalkoholfasern im Mengenverhältnis von 16 : 16 : 15 : 50 : 3 wurden in Wasser aufgeschlagen, auf einem Naßvliesformer zu einem Vlies geformt, entwässert und getrocknet. Das trockene Vlies wies ein Flächengewicht von 183 g/m² auf und wurde auf einer Plattenpresse bei 280 °C und 290 bar verpreßt.

Thermische Eigenschaften:

LOI: 37 bis 38% $O_2$
TGA: Onset bei 564 °C
Tg-Punkt: 312 °C

Mechanische Eigenschaften:

Zugfestigkeit - längs: 31 $N/mm^2$
- quer: 26 $N/mm^2$
Dehnung - längs: 12 %
- quer: 10 %

Die elektrische Durchschlagsfestigkeit betrug bei
Gleichspannung: 12 kV/mm und bei
Wechselspannung: 6 kV/mm.

Beispiel 11:

Polyimidfasern mit einem Fasertiter von 2,2 dtex und einer Stapellänge von 2,5 mm, 5,0 mm und 10,0 mm, sowie gemahlene Polyimidfasern mit einer Länge von 0,01 bis 5,0 mm und Polyvinylalkoholfasern im Mengenverhältnis von 16 : 16 : 15 : 50 : 3 wurden in Wasser aufgeschlagen, auf einem Naßvliesformer zu einem Vlies geformt, entwässert und getrocknet. Das so hergestellte Vlies wies ein Flächengewicht von 183 g/m² auf und wurde auf einer Plattenpresse bei 70 °C und 490 bar verpreßt.

Thermische Eigenschaften:

LOI: 37 bis 38 % $O_2$
TGA: Onset bei 564 °C
Tg-Punkt: 312 °C

Mechanische Eigenschaften:

Zugfestigkeit - längs: 27 $N/mm^2$
- quer: 22 $N/mm^2$
Dehnung - längs: 19 %
- quer: 15 %

Die elektrische Durchschlagsfestigkeit betrug bei
Gleichspannung: 47 kV/mm und bei
Wechselspannung: 26 kV/mm.

Beispiel 12:

Polyimidfasern mit einem Fasertiter von 0,7 dtex und einer Stapellänge von 2,5 mm sowie gemahlene Polyimidfasern mit einer Länge von 0,01 bis 5,0 mm und Polyvinylalkoholfasern im Mengenverhältnis von 48,5 : 48,5 : 3 wurden in Wasser aufgeschlagen und auf einem Naßvliesformer zu einem Vlies geformt, entwässert und getrocknet. Das so hergestellte Vlies wies ein Flächengewicht von 102 $g/m^2$ auf und wurde auf einer Plattenpresse bei 450° C und 50 bar verpreßt.

Thermische Eigenschaften:

LOI: 39 bis 40 % $O_2$
TGA: Onset bei 564° C
Tg-Punkt: 334° C

Mechanische Eigenschaften:

Zugfestigkeit - längs: 67 $N/mm^2$
- quer: 56 $N/mm^2$
Dehnung - längs: 11 %
- quer: 9 %

Die elektrische Durchschlagsfestigkeit betrug bei
Gleichspannung: 11 kV/mm und bei
Wechselspannung: 6 kV/mm.

Beispiel 13:

Polyimidfasern mit einem Fasertiter von 1,7 dtex und einer Stapellänge von 2,5 mm und 5,0 mm sowie Polyvinylalkoholfasern im Mengenverhältnis von 60 : 37 : 3 wurden in Wasser aufgeschlagen und auf einem Naßvliesformer zu einem Vlies geformt, entwässert und getrocknet. Das so hergestellte Vlies wies ein Flächengewicht von 70 $g/m^2$ auf und wurde auf einer Plattenpresse bei 350° C und 250 bar verpreßt.

Thermische Eigenschaften:

LOI: 38 bis 39 % $O_2$
TGA: Onset bei 564° C
Tg-Punkt: 328° C

Mechanische Eigenschaften:

Zugfestigkeit - längs: 81 $N/mm^2$
- quer: 68 $N/mm^2$
Dehnung - längs: 7 %
- quer: 5 %

Die elektrische Durchschlagsfestigkeit betrug bei
Gleichspannung: 14 kV/mm und bei
Wechselspannung: 7 kV/mm.

Beispiel 14:

Gemahlene Polyimidfasern mit einer Länge von etwa 0,01 bis 5,0 mm wurden in Wasser aufgeschlagen

und auf einer Papiermaschine zu einem Naßvlies geformt, entwässert, mit einem Bindemittel besprüht und getrocknet. Das so hergestellte Vlies wies ein Flächengewicht von 40 g/m² auf und wurde auf einem Zweiwalzenkalander bei 350°C und 500 N/m verpreßt.

Thermische Eigenschaften:

LOI: 38 bis 39 % $O_2$
TGA: Onset bei 564°C
Tg-Punkt: 328°C

Mechanische Eigenschaften:

Zugfestigkeit - längs: 30 N/mm²
- quer: 25 N/mm²
Dehnung - längs: 12 %
- quer: 9 %

Die elektrische Durchschlagsfestigkeit betrug bei
Gleichspannung: 13 kV/mm und bei
Wechselspannung: 7 kV/mm.

Beispiel 15:

Gemahlene Polyimidfasern mit einer Länge von 0,01 bis. 5,0 mm wurden in Wasser aufgeschlagen und auf einer Papiermaschine zu einem Naßvlies geformt, entwässert, mit einem Bindemittel besprüht und getrocknet. Das so hergestellte Vlies wies ein Flächengewicht von 55 g/m² auf und wurde auf einem Zweiwalzenkalander bei 350°C und 1000 kN/m verpreßt.

Thermische Eigenschaften:

LOI: 38 bis 39 % $O_2$
TGA: Onset bei 564°C
Tg-Punkt: 328°C

Mechanische Eigenschaften:

Zugfestigkeit - längs: 117 N/mm²
- quer: 98 N/mm²
Dehnung - längs: 8 %
- quer: 5 %

Die elektrische Durchschlagsfestigkeit betrug bei
Gleichspannung: 75 kV/mm und bei
Wechselspannung: 42 kV/mm.

Beispiel 16:

Gemahlene Polyimidfasern mit einer Länge von 0,01 bis 5,0 mm wurden in Wasser aufgeschlagen und auf einem Blattbildner zu einem Vlies geformt, entwässert und getrocknet. Das so hergestellte Vlies wies ein Flächengewicht von 252 g/m² auf und wurde auf einer Plattenpresse bei 330°C und 340 bar verpreßt.

Thermische Eigenschaften:

LOI: 37 bis 38 % $O_2$
TGA: Onset bei 564°C

Tg-Punkt: 319 °C

Mechanische Eigenschaften:

Zugfestigkeit: 79 N/mm²
Dehnung: 10 %

Die elektrische Durchschlagsfestigkeit betrug bei
Gleichspannung: 21 kV/mm und bei
Wechselspannung: 11 kV/mm.

Beispiel 17:

Gemahlene Polyimidfasern mit einer Länge von 0,01 bis 5,0 mm wurden in Wasser aufgeschlagen und auf einem Blattbildner zu einem Vlies geformt, entwässert, mit einem Bindemittel besprüht und getrocknet. Das so hergestellte Vlies wies ein Flächengewicht von 105 g/m² auf und wurde dreilagig auf einer Plattenpresse bei 350 °C und 480 bar verpreßt. Das Flächengewicht des Papiers betrug 315 g/m². Eine anschließende Trennung der drei Lagen war nicht mehr möglich.

Thermische Eigenschaften:

LOI: 38 bis 39 % $O_2$
TGA: Onset bei 564 °C
Tg-Punkt: 328 °C

Mechanische Eigenschaften:

Zugfestigkeit: 75 N/mm²
Dehnung: 13 %

Die elektrische Durchschlagsfestigkeit betrug bei
Gleichspannung: 68 kV/mm und bei
Wechselspannung: 39 kV/mm.

Beispiel 18:

Polyimidfasern mit einem Fasertiter von 2,2 dtex und einer Stapellänge von 2,5 mm, 5,0 mm und 10,0 mm sowie gemahlene Polyimidfasern mit einer Faserlänge von 0,01 bis 5,0 mm im Mengenverhältnis von 19 : 16 : 15 : 50 wurden in Wasser aufgeschlagen und auf einem Naßvliesformer zu einem Vlies geformt, entwässert und bei 320 °C getrocknet. Das so hergestellte Vlies wies ein Flächengewicht von 183 g/m² auf und wurde unmittelbar nach dem Trockenprozeß auf einem Zweiwalzenkalander bei 22 °C und 500 kN/m verpreßt.

Thermische Eigenschaften:

LOI: 37 bis 38 % $O_2$
TGA: Onset bei 564 °C
Tg-Punkt: 312 °C

Mechanische Eigenschaften:

Zugfestigkeit - längs: 33 N/mm²
- quer: 28 N/mm²
Dehnung - längs: 17 %
- quer: 14 %

Die elektrische Durchschlagsfestigkeit betrug bei
Gleichspannung: 66 kV/mm und bei
Wechselspannung: 37 kV/mm.

Beispiel 19:

Gemahlene Polyimidfasern mit einer Länge von 0,01 bis 5,0 mm wurden in Wasser aufgeschlagen und auf einem Blattbildner zu einem Vlies geformt, entwässert und bei 350 °C getrocknet. Das so hergestellte Vlies wies ein Flächengewicht von 100 g/m$^2$ auf und wurde unmittelbar nach dem Trocknungsprozeß auf einer Plattenpresse bei Raumtemperatur (21 °C) und 480 bar verpreßt.

Thermische Eigenschaften:

LOI: 37 bis 38 % $O_2$
TGA: Onset bei 564 °C
Tg-Punkt: 312 °C

Mechanische Eigenschaften:

Zugfestigkeit: 15 N/mm$^2$
Dehnung: 18 %
Die elektrische Durchschlagsfestigkeit betrug bei
Gleichspannung: 44 kV/mm und bei
Wechselspannung: 25 kV/mm.

Beispiel 20:

Gemahlene Polyimidfasern mit einer Länge von 0,01 bis 5,0 mm wurden in Wasser aufgeschlagen und auf einem Naßvliesformer zu einem Vlies geformt, entwässert, mit Siliconfinish besprüht und bei 150 °C getrocknet. Das so hergestellte Vlies wies ein Flächengewicht von 205 g/m$^2$ auf und wurde auf einer Plattenpresse bei 320 °C und 350 bar verpreßt.

Thermische Eigenschaften:

LOI: 37 bis 38 % $O_2$
TGA: Onset bei 564 °C
Tg-Punkt: 312 °C

Mechanische Eigenschaften:

Zugfestigkeit - längs: 75 N/mm$^2$
- quer: 63 N/mm$^2$
Dehnung - längs: 10 %
- quer: 8 %
Die elektrische Durchschlagsfestigkeit betrug bei
Gleichspannung: 24 kV/mm und bei
Wechselspannung: 13 kV/mm.

Beispiel 21:

Polyimidfibride und gemahlene Polyimidfasern mit einer Länge von 0,01 bis 5,0 mm wurden im Mengenverhältnis von 50:50 in Wasser aufgeschlagen und auf einem Blattbildner zu einem Vlies geformt, entwässert und bei 105 °C getrocknet. Das so hergestellte Vlies wies ein Flächengewicht von 1090 g/m$^2$ auf und wurde auf einer Plattenpresse bei 350 °C und 380 bar verpreßt.

Thermische Eigenschaften:

LOI: 38 bis 39 % $O_2$
TGA: Onset bei 564° C
Tg-Punkt: 328° C

Mechanische Eigenschaften:

Zugfestigkeit: 57 $N/mm^2$
Dehnung: 14 %
Die elektrische Durchschlagsfestigkeit betrug bei
Gleichspannung: 31 kV/mm und bei
Wechselspannung: 17 kV/mm.

Beispiel 22:

Polyimidfibride wurden in Wasser aufgeschlagen und auf einem Blattbildner zu einem Vlies geformt, entwässert und bei 105° C getrocknet. Das so hergestellte Vlies wies ein Flächengewicht von 1090 $g/m^2$ auf und wurde auf einer Plattenpresse bei 350° C und 380 bar verpreßt.

Thermische Eigenschaften:

LOI: 38 bis 39 % $O_2$
TGA: Onset bei 564° C
Tg-Punkt: 328° C

Mechanische Eigenschaften:

Zugfestigkeit: 57 $N/mm^2$
Dehnung: 14 %
Die elektrische Durchschlagsfestigkeit betrug bei
Gleichspannung: 31 kV/mm und bei
Wechselspannung: 17 kV/mm.

Beispiel 23:

Polyimidfasern mit einer Länge von 2,5 mm und einem Titer von 2,2 dtex wurden in Wasser aufgeschlagen und auf einem Blattbildner zu einem Vlies geformt, entwässert, mit Siliconfinish besprüht und bei 150° C getrocknet. Das so hergestellte Vlies wies ein Flächengewicht von 210 $g/m^2$ auf und wurde auf einer Plattenpresse bei 320° C und 350 bar verpreßt.

Thermische Eigenschaften:

LOI: 37 bis 38 % $O_2$
TGA: Onset bei 564° C
Tg-Punkt: 312° C

Mechanische Eigenschaften:

Zugfestigkeit: 88 $N/mm^2$
Dehnung: 12 %
Die elektrische Durchschlagsfestigkeit betrug bei
Gleichspannung: 21 kV/mm und bei
Wechselspannung: 10 kV/mm.

Beispiel 24:

Polyimidfasern mit einer Länge von 120 mm und einem Titer von 20 dtex wurden in Wasser aufgeschlagen und auf einem Blattbildner zu einem Vlies geformt, entwässert, mit Siliconfinish besprüht und bei 150° C getrocknet. Das so hergestellte Vlies wies ein Flächengewicht von 503 g/m² auf und wurde auf einer Plattenpresse bei 320° C und 350 bar verpreßt.

Thermische Eigenschaften:

LOI: 37 bis 38 % $O_2$
TGA: Onset bei 564° C
Tg-Punkt: 312° C

Mechanische Eigenschaften:

Zugfestigkeit: 81 N/mm² Dehnung: 20 %
Die elektrische Durchschlagsfestigkeit betrug bei
Gleichspannung: 19 kV/mm und bei
Wechselspannung: 7 kV/mm.

**Ansprüche**

1. Schwer entflammbares, hochtemperaturbeständiges, papierartiges Material auf Basis von Polyimidfasern der allgemeinen Formel

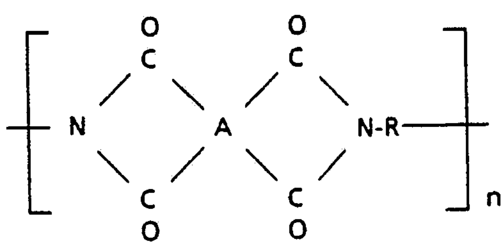

, (I)

worin n eine ganze Zahl größer als 1 bedeutet und A für eine vierbindige aromatische Gruppe ausgewählt aus

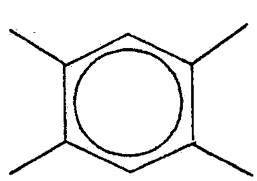 , 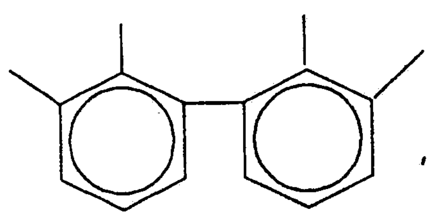 ,

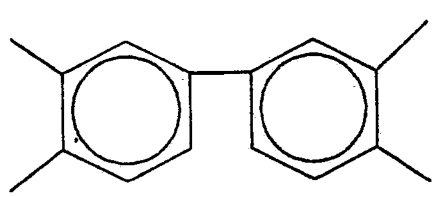 oder 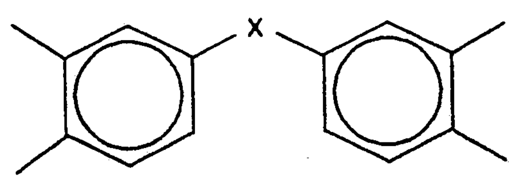

worin X für CO, $CH_2$, O, S, $CF_2$ steht und R für mindestens eine der folgenden zweibindigen aromatischen Gruppen, ausgewählt aus

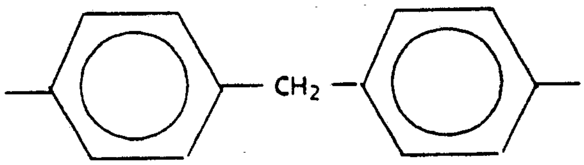 , 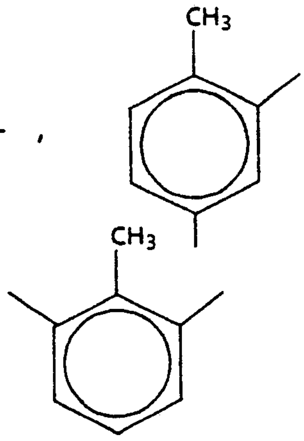 ,

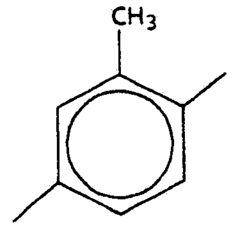 oder

steht, welches Material in Kombination die folgenden Eigenschaften aufweist: ein Flächengewicht zwischen 20 und 1.100 g/m², insbesondere zwischen 60 und 290 g/m² einen LOI-Wert (limited oxygen index) von mindestens 32 % $O_2$ und einen Tg-Punkt von mindestens 300 °C.

2. Papierartiges Material nach Anspruch 1, gekennzeichnet durch die weiteren Merkmale:
- eine Reißfestigkeit in Längsrichtung zwischen 30 und 120 N/mm², und
- eine elektrische Durchschlagsfestigkeit von 10 bis 65 kV/mm bei Gleichspannung und von 15 bis 50 KV/mm bei Wechselspannung.

3. Papierartiges Material nach Anspruch 1 oder 2, dadurch gekennzeichnet, daß die Polyimidfasern teilweise durch andere hochtemperaturbeständige organische oder anorganische Fasern ersetzt sind.

4. Verfahren zur Herstellung eines schwer entflammbaren, hochtemperaturbeständigen, papierartigen Materials nach einem der Ansprüche 1 bis 3, mit einem Flächengewicht zwischen 60 und 290 g/m², dadurch gekennzeichnet, daß ein handhabbares Flächengebilde auf Basis von Polyimidfasern der allgemeinen Formel

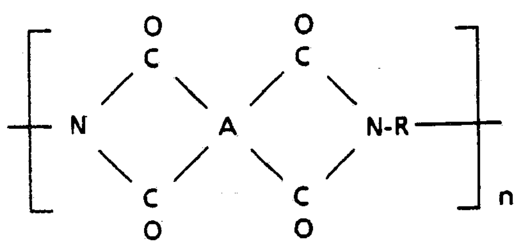 , (I)

wobei n, A und X die oben angegebene Bedeutung besitzen und R für eine zweibindige aromatische Gruppe steht, mit einer Polyimidlösung in Kontakt gebracht, getrocknet und gegebenenfalls verdichtet wird.

5. Verfahren nach Anspruch 4, dadurch gekennzeichnet, daß als handhabbare Flächengebilde Gewebe, Gewirke, Vliese oder Nadelfilze, vorzugsweise in hitzegeschrumpftem Zustand, verwendet werden.

6. Verfahren nach Anspruch 4 oder 5, dadurch gekennzeichnet, daß als Polyimidlösung eine Lösung von Polyimiden der allgemeinen Formel I, wobei n, A, X und R die oben angegebene Bedeutung besitzen, in einem polaren Lösungsmittel, vorzugsweise Dimethylformamid, Dimethylsulfoxid, N-Methylpyrrolidon (NMP), Dimethylacetamid (DMAc), oder Mischungen davon, verwendet wird.

7. Verfahren nach Anspruch 6, dadurch gekennzeichnet, daß die Polyimidlösung einen Polymeranteil von 3 bis 40 Gew.% aufweist.

8. Verfahren nach einem oder mehreren der Ansprüche 4 bis 7, dadurch gekennzeichnet, daß das getrocknete Flächengebilde auf einem Glättwerk, Mehrwalzenkalander oder in einer Plattenpresse vorzugsweise bei einer Temperatur zwischen 50 und 350 °C verdichtet wird.

9. Verfahren zur Herstellung eines schwer entflammbaren, hochtemperaturbeständigen, papierartigen Materials nach einem der Ansprüche 1 bis 3 mit einem Flächengewicht zwischen 60 und 290 g/m², dadurch gekennzeichnet, daß eine Pulpe bestehend aus eine wässerigen Suspension von Polyimidfasern und Polyimidfibrillen und/oder Polyimidfibriden mit Struktureinheiten der allgemeinen Formel

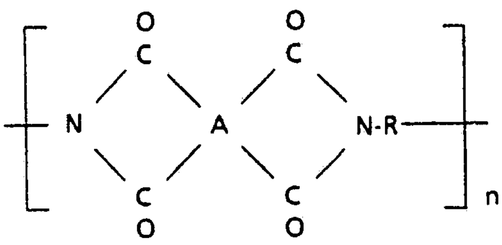

, (I)

wobei n, A, X und R die oben angegebene Bedeutung besitzen, in an sich bekannter Weise auf einer Papiermaschine zu einem Vlies verarbeitet und dieses entwässert und getrocknet wird.

10. Verfahren zur Herstellung eines schwer entflammbaren, hochtemperaturbeständigen Materials nach einem der Ansprüche 1 bis 3 mit einem Flächengewicht zwischen 20 und 1.100 g/m$^2$, dadurch gekennzeichnet, daß eine Pulpe bestehend aus einer wässerigen Suspension von Polyimidfasern und gewünschtenfalls Polyimidfibriden mit Struktureinheiten der allgemeinen Formel

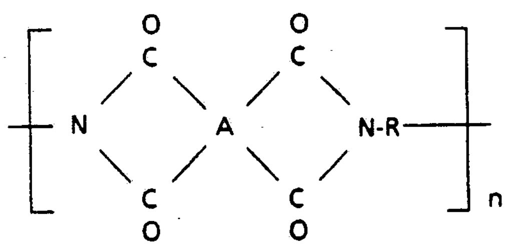

, (I)

wobei n, A, X und R die oben angegebene Bedeutung besitzen, in an sich bekannter Weise, auf einer Papiermaschine zu einem Vlies verarbeitet und dieses entwässert und getrocknet wird, wobei die Polyimidfasern zur Vliesbildung in zerkleinertem Zustand, u.zw. mit einer Faserlänge von 0,01 bis 120 mm eingesetzt werden.

11.Verfahren nach Anspruch 10, dadurch gekennzeichnet, daß die wässerige Suspension noch zusätzlich Fasern aus Polyvinylalkohol enthält.

12.Verfahren nach einem der Ansprüche 10 oder 11, dadurch gekennzeichnet, daß die Vliesbildung nicht auf einer Papiermaschine, sondern auf einem Naßvliesformer oder einem Blattbildner vorgenommen wird.

13.Verfahren nach einem oder mehreren der Ansprüche 10 bis 12, dadurch gekennzeichnet, daß Hilfsstoffe bzw. Bindemittel der Pulpe beigemischt oder dem entwässerten Vlies aufgebracht werden.

14.Verfahren nach Anspruch 13, dadurch gekennzeichnet, daß die entwässerte Bahn mit Siliconverbindungen besprüht und anschließend getrocknet wird.

15.Verfahren nach einem oder mehreren der Ansprüche 10 bis 13, dadurch gekennzeichnet, daß das getrocknete Vlies in einer Plattenpresse oder einem Mehrwalzenkalander verpreßt wird.

16.Verfahren nach Anspruch 15, dadurch gekennzeichnet, daß mehrere übereinandergelegte Vliese miteinander verpreßt werden.